Europäisches Patentamt

European Patent Office

Office européen des brevets

(11) Veröffentlichungsnummer: **0 416 214 A1**

## (12) EUROPÄISCHE PATENTANMELDUNG

(21) Anmeldenummer: **90110017.2**

(22) Anmeldetag: **26.05.90**

(51) Int. Cl.⁵: **E01H  1/08, A01D 51/00**

(30) Priorität: **05.09.89 DE 3929388**

(43) Veröffentlichungstag der Anmeldung:
**13.03.91 Patentblatt  91/11**

(84) Benannte Vertragsstaaten:
**AT BE CH DE DK FR GB IT LI LU NL**

(71) Anmelder: **Maschinen-Mohr Inh.: Hermann Mohr**
**Höttinger Strasse**
**W-8836 Ellingen(DE)**

(72) Erfinder: **Mohr,Hermann**
**Höttinger Strasse 44**
**W-8836 Ellingen(DE)**

(74) Vertreter: **Patentanwälte Czowalla . Matschkur + Partner**
**Dr.-Kurt-Schumacher-Strasse 23 Postfach 9109**
**W-8500 Nürnberg 11(DE)**

(54) **Saugvorrichtung mit Saugkasten und Sammelgut-Behälter.**

㊗ Saugvorrichtung, insbesondere für fahrbare Mäh- und Kehrmaschinen, mit einem bodenseitig offenen Saugkasten (3) und einem Behälter (1), welche miteinander durch ein Rohr (6) oder einen Schlauch verbunden sind, wobei im Bereich des Behälter-Einlasses für den Schlauch (6) ein erstes Gebläse zum Ansaugen von Sammelgut angeordnet ist mit wenigstens einem weiteren im Saugkasten (3) angeordneten Gebläse (17).

FIG. 2

## SAUGVORRICHTUNG MIT SAUGKASTEN UND SAMMELGUT-BEHÄLTER

Die Erfindung richtet sich auf eine Saugvorrichtung, insbesondere für fahrbare Mäh- und Kehrmaschinen, mit einem bodenseitig offenen Saugkasten und einem Behälter, welche miteinander durch ein Rohr oder einen Schlauch verbunden sind, wobei im Bereich des Behälter-Einlasses für den Schlauch ein Gebläse zum Ansaugen von Sammelgut angeordnet ist.

Mit derartigen Mäh- und Kehrmaschinen versehene Saugvorrichtungen, bei denen das zu sammelnde Mäh- und Kehrgut durch den Saugkasten hindurch in den mitgeführten Sammelgut-Behälter eingeblasen wird, sind in den unterschiedlichsten Ausführungen bekannt. Der Behälter ist periodisch an Deponien zu entleeren. Neben Nachläufer-Anordnungen, bei denen der Behälter als Nachläufer-Anhänger an das das Mäh-bzw. Kehrwerk tragende Zugfahrzeug angehängt ist, sind auch bereits Vorrichtungen vorgeschlagenen worden, bei denen der Behälter auf das Fahrzeug aufgesattelt ist und jeweils durch Ankippen entleert werden kann. Der mit dem Behälter durch einen flexiblen Schlauch gekoppelte Saugkasten ist dann vor der Stirnseite des Zugfahrzeugs steuerbar bewegbar aufgehängt.

Bei allen diesen Anordnungen tritt das Problem auf, daß das im Bereich des Behälter-Einlasses angeordnete Gebläse derart leistungsstark ausgelegt sein muß, um auch noch schweres Sammelgut, z. B. nasse Schmutzteile durch den Saugkasten hindurch in den Sammelgut-Behälter einblasen zu können. Der Einsatz eines ausreichend leistungsstark gebau ten Gebläses verteuert naturgemäß die Anschaffungskosten für die Saugvorrichtung, wobei wegen der notwendigen Hochzüchtung des Gebläses eine Verminderung der Funktionszuverlässigkeit der Saugvorrichtung eintreten kann. Zur Lösung dieser Probleme wird erfindungsgemäß bei einer Saugvorrichtung mit den eingangs genannten Merkmalen vorgeschlagen, im Saugkasten wenigstens ein weiteres Gebläse anzuordnen.

Dieses weitere Gebläse dient dazu, ggf. auch nassen Schmutz oder sonstige schwere Sammelgut-Körper anzusaugen und wenigstens bis zur Mitte der Längserstreckung des Schlauchs oder (ggf. flexiblen) Rohres zu befördern; dort "übernimmt" das Sauggebläse, das im oder am Behälter angeordnet und von diesem aus seine Wirkung entfaltet, die weitere Beförderung des Sammelguts. Ein mit der Erfindung erzielter vorteilhafter Effekt besteht darin, daß sich die Leistungen beider Gebläse nicht nur einfach addieren, sondern daß insgesamt von der bodenseitigen Öffnung des Saugkastens bis zum Behälterinneren ein homogener, gleichmäßig starker Saugstrom geschaffen wird. Jedes der Gebläse entfaltet in seiner unmittelbaren Umgebung einen ausreichend starken Sog und im entfernteren Bereich wird die unvermeidliche Sogabschwächung vom jeweils anderen Gebläse ausgeglichen. Mithin können die beiden Gebläse für sich genommen robust, einfach und billig ausgeführt sein.

Nach einer Weiterbildung der Erfindung, die von einem Saugkasten mit Kehrwerk ausgeht, ist das weitere Gebläse oberhalb des Kehrwerk angeordnet. Eine zweckmäßige Realisierung dieses Gedankens besteht darin, daß der Saugkasten eine untere Kammer für das Kehrwerk und unmittelbar darüber be findlich eine obere Kammer für das weitere Gebläse aufweist, die durch einen Durchlaß in einer beiden Kammern gemeinsamen Trennwand miteinander verbunden sind. Mit dieser Anordnung sind die Voraussetzungen dafür geschaffen, daß das Kehrwerk Sammelgut-Körper in die Nähe des Durchlasses bewegen und dabei dem vom Gebläse ausgehenden Sog aussetzen kann. Der Sog bewirkt einen Sammelgut-Strom durch den Durchlaß in Richtung des Schlauchses bzw. Rohres zum Behälter.

Bei unmittelbar über dem Kehrwerk angeordnetem Behälter weist mit Vorteil das Gebläse ein um eine zum Boden senkrechte Achse rotierendes Flügel-, Turbinen- oder Schaufelrad, das Kehrwerk ein um eine zum Boden parallele Achse rotierende Bürste auf. Das bei dieser Anordnung vorteilhafte Zusammenwirken besteht darin, daß das Rad aufgrund seiner Drehung Sammelgut-Körper nach oben in die Nähe des Gebläserads befördern kann, welches dann aufgrund seiner parallel zum Boden verlaufenden Anordnung eine dem zweckmäßigerweise möglichst waagrechten Verlauf des Schlauches entsprechenden Sog bewirkt. Um dabei eine große Kehrbreite zu erzielen, besteht eine vorteilhafte Weiterbildung der Erfindung darin, eine längliche Bürste zu verwenden, deren Längsachse sich - bei fahrbaren Mäh- oder Kehrmaschinen -quer zur Fahrtrichtung erstreckt.

Beim oben erörterten Vorsehen eines Durchlasses zwischen der unteren Kammer für das Kehrwerk und der oberen Kammer für das weitere Gebläse ist nach einer vorteilhaften Weiterbildung der Erfindung die Drehachse des Gebläses mit dem Durchlaß längs einer gemeinsamen Flucht angeordnet. Insbe sondere geht die gedachte Verlängerung der Drehachse in die zentrische (mittlere) Längsachse des Durchlasses über. Dadurch wird eine außerordentlich starke und homogene Luftströmung von der unteren zur oberen Kammer erreicht. In diesem Zusammenhang, wenn das Kehrwerk als Quer- zur Fahrtrichtung verlaufende, längliche Bürste ausgebildet ist, kann im Rahmen der Erfindung diese gemeinsame Flucht die Drehachse der Bürste vorzugsweise senkrecht kreuzen.

Nach einer weiteren Ausbildung der Erfindung ist vorgesehen, daß das Kehrwerk in einem der Fahrtrichtung entgegengesetzten Drehsinn, mit anderen Worten, bezüglich der Fahrtrichtung im Uhrzeigersinn gedreht wird. Mit dieser einfachen Maßnahme wird die überraschende Wirkung erzielt, daß die vom Kehrwerk erzeugten, im wesentlichen tangential zu dessen Umfang verlaufenden Luftströmungen über den Durchlaß durch die gemeinsame Wand der oberen und unteren Kammer mit dem Luftsog des Gebläses zusammenwirken: tangentiale Luftströmungen und Gebläsesog fördern sich gegenseitig und ergeben für vom Kehrwerk hochgekehrte Schmutzpartikel dadurch eine besonders starke Beschleunigung durch den Schlauch zum Behälter.

Eine konstruktive Weiterbildung der Erfindung besteht darin, daß der Saugkasten an seiner der Fahrtrichtung zugewandten Außenseite einen zum Boden konkaven Schurz trägt. Bei entgegen der Fahrtrichtung rotierendem Kehrwerk bzw. Bürste können dabei eventuell nach vorne (in Fahrtrichtung) geschleuderte Schmutzpartikel aufgefangen und zurückgeworfen (reflektiert) werden. Eine konkrete Ausbildung für einen derartigen stirnseitigen Reflektorschurz besteht darin, daß er im Querschnitt halbkreis-zylindrisches Profil besitzt, dessen Längsachse zur Drehachs des Kehrwerks parallel verläuft.

Weitere Einzelheiten, Merkmale und Vorteile der Erfindung ergeben sich aus der nachfolgenden Beschreibung eines bevorzugten Ausführungsbeispiels der Erfindung sowie anhand der Zeichnung. Darin zeigen:

Fig. 1 eine perspektivische Darstellung einer Kehrmaschine mit Zugfahrzeug, und

Fig. 2 eine Schnittdarstellung gemäß der Linie II-II in Fig. 1.

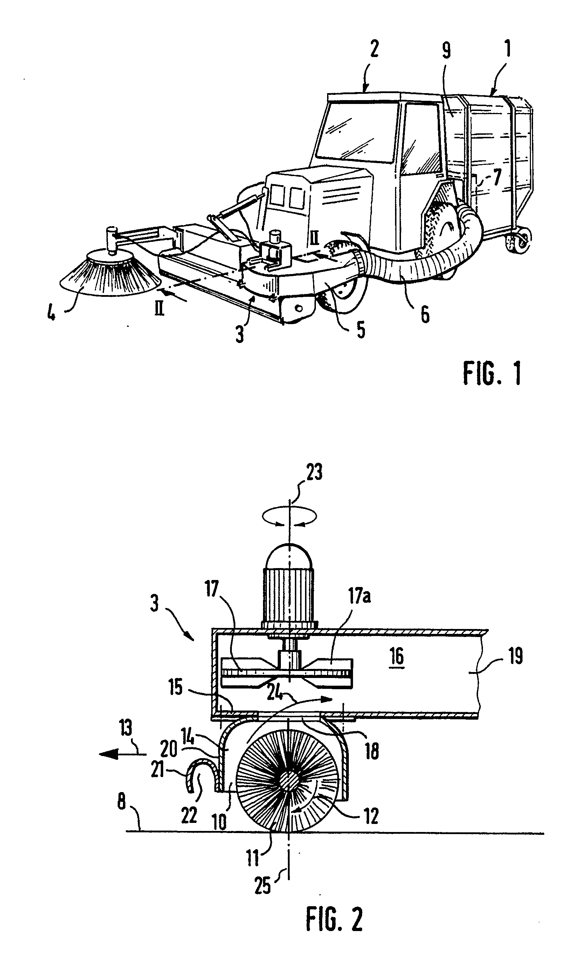

Gemäß dem in Fig. 1 dargestellten Ausführungsbeispiel ist ein Sammelgut-Behälter 1 als Nachläufer-Anhänger für ein Zugfahrzeug 2 ausgebildet. An der Stirnseite des Zugfahrzeugs 2 ist ein Saugkasten 3 mit Tellerbesen 4 steuerbar verstellbar angebracht. Der Saugkasten 3 ist mit einem seitlich angeordneten, nach rückwärts zum Behälter 1 weisenden Absaugstutzen 5 versehen, an dem das eine Ende eines flexiblen Rohres 6 angeschlossen ist. Dessen entgegengesetztes Ende ist an einen (in Fig. 1 nicht sichtbaren) Einblasstutzen angeschlossen, der in die Stirnwand 9 des Sammelgut-Behälters 1 eingelassen ist. Mit dem Einblasstutzen bzw. dessen Einblasöffnung steht ein in Fig. 1 gestrichelt angedeutetes Gebläse 7 in Wirkungsverbindung.

Gemäß der vergrößerten Schnittdarstellung in Fig. 2 besitzt der Saugkasten 3 auf seiner zum Boden 8 gerichteten Unterseite eine Öffnung 10, durch die eine etwa im Querschnitt dargestellte Bürste 11 mit ihrem Umfang hindurchtritt. Ihr Drehsinn 12 ist so gerichtet, daß sie der Fahrtrichtung 13 entgegenwirkt. Die Kehrbürste 11 ist von einer unteren Bürsten-Kammer 14 umgeben, die durch eine Trennwand 15 von der unmittelbar benachbarten oberen Kammer 16 für ein Gebläse-Turbinenrad 17 mit Flügeln 17a abgegrenzt ist. Die Trennwand 15 ist von einem Durchlaß 18 unterbrochen, der die untere Bürstenkammer 14 und die obere Gebläsekammer 16 miteinander verbindet. Der weitere, abgebrochen dargestellte Ansatz 19 der Gebläsekammer 16 geht in den in Fig. 1 dargestellten Absaugstutzen 5 über. An der in Fahrtrichtung 13 vorderen Außenwandung 20 in deren unterem Bereich ist ein zum Boden 8 konkav geformter Schurz 21 befestigt, der im Querschnitt vorzugsweise ovales halbzylindrisches Profil aufweist. Dieses ergibt einen Hohlraum 22, der hineingeschleuderte Schmutzpartikel quasi wie ein reflektierender Hohlspiegel in den Wirkungsbereich der Bürste 11 zurückschleudert.

Das Zusammenwirken des Gebläse-Turbinenrads 17 mit der rotierenden Bürste 11 ist wie folgt: Die Bürste 11 rotiert entsprechend ihrem Drehsinn 12 bzw. entgegen der Fahrtrichtung 13 und schleudert dabei ggf. (nicht gezeichnete) Schmutzpartikel nach oben zum Durchlaß 18. Das Turbinenrad 17 rotiert um eine senkrecht zum Boden 8 gerichtete Drehachse 23 und erzeugt dabei einen Sog. Die Schleuderwirkung der rotierenden Bürste 11 und die Sogwirkung des Turbinenrades 17 ergeben zusammen eine Förderwirkung für etwaige Schmutzpartikel, woraus für diese der mit gekrümmtem Pfeil angedeutete Förderweg 24 resultiert, der zum Ansatz 19 bzw. zum Absaugstutzen 5 gerichtet ist. Diese Förderwirkung nimmt mit zunehmender Entfernung vom Gebläse-Turbinenrad 17 ab, welche aber vom ersten, dem Behälter zugeordneten Gebläse 7 (vgl. Fig. 1) mit zunehmender Nähe zum Behälter 1 verstärkt wird.

Die Wirkungsweise des Gebläses 7 im Behälter 1 ist an sich bekannt und zum Beispiel in dem europäischen Patent Nr. 0 016 440 beschrieben.

## Ansprüche

1. Saugvorrichtung, insbesondere für fahrbare Mäh- und Kehrmaschinen, mit einem bodenseitig offenen Saugkasten und einem Behälter, welche miteinander durch ein Rohr oder einen Schlauch verbunden sind, wobei im Bereich des Behälter-Einlasses für den Schlauch ein erstes Gebläse zum Ansaugen von Sammelgut angeordnet ist, gekennzeichnet durch wenigstens ein weiteres im Saugkasten (3) angeordnetes Gebläse (17).

2. Saugvorrichtung nach Anspruch 1, deren Saugkasten ein Kehrwerk aufweist, dadurch gekennzeichnet, daß das weitere Gebläse (17) oberhalb des Kehrwerks (11) angeordnet ist.

3. Saugvorrichtung nach Anspruch 2, dadurch gekennzeichnet, daß der Saugkasten (3) eine untere Kammer (14) für das Kehrwerk (11) und unmittelbar darüber eine obere Kammer (16) für das weitere Gebläse (17) aufweist, die durch einen Durchlaß (18) in einer gemeinsamen Trennwand (15) miteinander verbunden sind.

4. Saugvorrichtung nach Anspruch 2 oder 3, dadurch gekennzeichnet, daß das Gebläse ein um eine zum Boden (8) senkrechte Achse (23) rotierendes Flügel-, Turbinen- oder Schaufelrad (17), das Kehrwerk eine um eine zum Boden (8) parallele Achse rotierende Bürste (11) aufweist.

5. Saugvorrichtung nach Anspruch 4, gekennzeichnet durch eine längliche Bürste (11), deren Längsachse sich ggf. quer zur Fahrtrichtung (13) erstreckt.

6. Saugvorrichtung nach Anspruch 3 und einem der sonstigen vorherigen Ansprüche, dadurch gekennzeichnet, daß die Drehachse (23) des Gebläses (17) mit dem Durchlaß (18), insbesondere dessen zentrischer Längsachse (25) fluchtet.

7. Saugvorrichtung nach Anspruch 4 und 6, dadurch gekennzeichnet, daß die der Gebläsedrehachse (23) und dem Durchlaß (18) gemeinsame Flucht (25) sich mit der Drehachse der Bürste (11) schneidet.

8. Saugvorrichtung nach einem der vorhergehenden Ansprüche, dadurch gekennzeichnet, daß das Kehrwerk (11) in einem der Fahrtrichtung (13) entgegengesetzten Drehsinn (12) rotiert wird.

9. Saugvorrichtung nach einem der vorhergehenden Ansprüche, dadurch gekennzeichnet, daß der Saugkasten (3) an seiner der Fahrtrichtung (23) zugewandten Außenseite (20) einen zum Boden (8) konkaven Schurz (21) trägt.

10. Saugvorrichtung nach Anspruch 9, dadurch gekennzeichnet, daß der Schurz (21) im Querschnitt halbkreiszylindrisches Profil besitzt, dessen Längsachse zur Drehachse des Kehrwerks (11) parallel verläuft.

FIG. 1

FIG. 2

# EUROPÄISCHER RECHERCHENBERICHT

Nummer der Anmeldung

**EP 90 11 0017**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 466 729   (GUTBROD) <br> * Insgesamt * | 1-6,8 | E 01 H 1/08 <br> A 01 D 51/00 |
| D,A | EP-A-0 016 440   (MASCHINEN-MOHR) <br> * Figuren 1,2; Anspruch 1 * | 1 | |
| A | US-A-3 892 008   (CHRISTENSEN) <br> * Figur 3 * | 9,10 | |
| A | WO-A-8 101 362   (ROLBA AG) <br> * Zusammenfassung; Figur 1 * | 1 | |
| A | WO-A-8 401 400   (FMC) <br> * Zusammenfassung; Figuren 2,5 * | 1 | |

| RECHERCHIERTE SACHGEBIETE (Int. Cl.5) |
|---|
| E 01 H <br> A 01 D |

Der vorliegende Recherchenbericht wurde für alle Patentansprüche erstellt

| Recherchenort | Abschlußdatum der Recherche | Prüfer |
|---|---|---|
| Den Haag | 20 November 90 | DIJKSTRA G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument